(19) Europäisches Patentamt
European Patent Office
Office européen des brevets

(11) **EP 2 372 963 A1**

(12) **EUROPEAN PATENT APPLICATION**

(43) Date of publication:
05.10.2011 Bulletin 2011/40

(51) Int Cl.:
*H04L 12/56* (2006.01)　　　*H04W 72/12* (2009.01)

(21) Application number: 11156078.5

(22) Date of filing: 25.02.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 31.03.2010　JP 2010080381

(71) Applicant: FUJITSU LIMITED
Kawasaki-shi,
Kanagawa 211-8588 (JP)

(72) Inventor: **Tazaki, Yuji**
**Kawasaki-shi**
**Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **Base station apparatus, base radio transmission method in base station apparatus, and radio communication system**

(57)　　A base station apparatus (200) for performing radio communication with a terminal apparatus (100), the base station apparatus including: a statistical information generation unit (216) which generates first statistical information relating to the terminal apparatus and second statistical information relating to user data at a first or second quality level; a quality selection processing unit (225) which selects the user data at the first or second quality level based on the first and second statistical information; and a radio transmission unit (236) which performs radio transmission to the terminal apparatus of the selected user data at the first or second quality level.

FIG. 11

## Description

The present invention relates to a base station apparatus, a radio transmission method in a base station apparatus, and a radio communication system.

In the prior art, there are known radio communication systems in which a base station apparatus radio-transmits user data, including image data and audio data, and a terminal apparatus receives this data and performs streaming reproduction.

As technology relating to such a radio communication system, for example there is technology in which a distribution server time-shifts a plurality of data streams which are transmitted to a receiver, and when a transmission error occurs in a first data stream, the receiver switches to a second data stream which is time-delayed.

Further, there is also technology in which, when for example transmission degradation occurs during reproduction by a streaming player of an A rank file transmitted from a streaming server, a rank switching request is transmitted to the server, and the server transmits a B rank file with lower quality level than the A rank file.

Patent Reference 1: Japanese Laid-open Patent Publication No. 2008-154145

Patent Reference 2: Japanese Laid-open Patent Publication No. 2005-121693

However, as stated above, because technology to time-shift and transmit a plurality of data streams entails radio transmission of a plurality of data streams, a greater amount of radio bandwidth is used than when a single data stream is transmitted. For example, even when there are no transmission errors, a plurality of data streams are transmitted to the receiver, and so a number of data streams may not be used by the receiver, and so there are cases in which the radio bandwidth is used wastefully.

Further, in technology in which a streaming player transmits a switching request, a switching request is transmitted to the server when a player-side application first detects degradation of transmission quality. Hence if for example a change occurs in radio conditions when the player transmits a switching request, a file transmitted by the server is not responsive to this change, and a file of appropriate quality may not be transmitted. For example, when further transmission degradation occurs, the player may not be able to reproduce the received file due to transmission degradation, and so the player may not be able to reproduce video smoothly in real time.

Accordingly, it is desirable to provide a base station apparatus, radio transmission method in a base station apparatus, and radio communication system to enable effective utilization of radio bandwidth, and/or to enable selection and transmission of data at the optimum quality.

According to an aspect of the invention, a base station apparatus for performing radio communication with a terminal apparatus includes: a statistical information generation unit which generates first statistical information relating to the terminal apparatus and second statistical information relating to user data at a first or second quality level; a quality selection processing unit which selects the user data at the first or second quality level based on the first and second statistical information; and a radio transmission unit which performs radio transmission to the terminal apparatus of the selected user data at the first or second quality level.

Reference is made, by way of example only, to the accompanying drawings in which:

Fig. 1 illustrates an example of the configuration of a radio communication system;
Fig. 2A is a diagram to explain the flow of user data, and Fig. 2B is a diagram to illustrate a protocol stack example;
Fig. 3 illustrates an example of the configuration of a GTP-U packet;
Fig. 4A and Fig. 4B illustrate examples of the configuration of an E-RAB ID;
Fig. 5A illustrates a connection example, and Fig. 5B illustrates a protocol stack example;
Fig. 6 illustrates an example of switching timing;
Fig. 7 illustrates an example of switching timing;
Fig. 8 illustrates an example of the configuration of a streaming server;
Fig. 9 illustrates an example of the configuration of a PDN-GW or S-GW;
Fig. 10 illustrates an example of the configuration of an MME;
Fig. 11 illustrates an example of the configuration of a base station apparatus;
Fig. 12 illustrates an example of the configuration of a terminal apparatus;
Fig. 13 illustrates an example of scheduling;
Fig. 14 illustrates an example of scheduling;
Fig. 15 illustrates an example of scheduling;
Fig. 16 illustrates an example of the configuration of a PHY frame;
Fig. 17 illustrates an example of trends in interval average values of radio characteristics and data quantities;
Fig. 18 is a flowchart illustrating an operation example; and
Fig. 19 illustrates another example of the configuration of a base station apparatus.

Below, embodiments to implement the invention are explained.

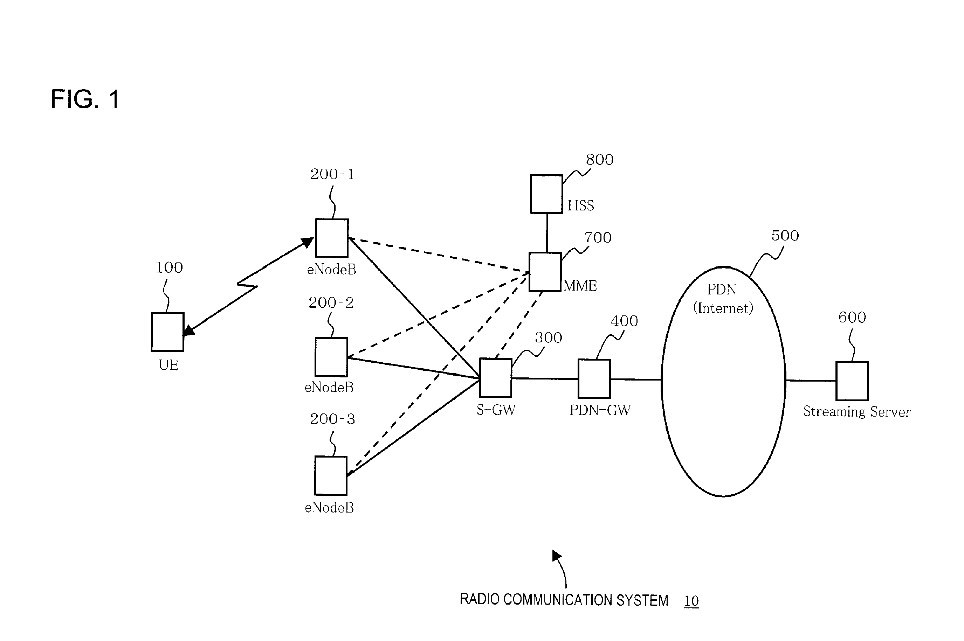

Fig. 1 illustrates an example of the configuration of a radio communication system 10. The radio communication system 10 includes a user terminal apparatus (UE: User Equipment, hereafter "terminal") 100; base station apparatuses (eNodeB: evolved NodeB, hereafter "base station") 200-1 to 200-3; a S-GW (Serving Gateway) 300; a PDN-GW (Packet Data Network Gateway) 400; a PDN (Packet Data Network) 500; a streaming server 600; a MME (Mobility Management Entity) 700; and a HSS (Home Subscriber Server) 800. The S-GW 300 and PDN-GW 400, streaming server 600, MME 700, and HSS 800 are upper node apparatuses (in other words, nodes at a higher hierarchical level) compared with the base stations 200-1 to 200-3.

The terminal 100 can transmit and receive data and similar with each of the base stations 200-1 to 200-3 within a range in which radio communication is possible. The terminal 100 can for example perform streaming reproduction of user data transmitted from the base stations 200-1 to 200-3.

The base stations 200-1 to 200-3 radio-access the terminal 100 and transmit and receive user data and similar. Further, the base stations 200-1 to 200-3 transmit and receive packet data (hereafter called GTP-U packets) by a GTP-U protocol with the S-GW 300 or PDN-GW 400 on the core network side. Details of GTP-U packets are explained below. Each of the base stations 200-1 to 200-3 collects the radio conditions for the terminal 100 on the radio side and the reception conditions for user data on the network side, and selects from among user data items with the same content and a plurality of quality levels the user data item with optimum quality level, and transmits this user data item to the terminal 100. Details are explained below. Fig. 1 illustrates an example of three base stations 200-1 to 200-3, but there may for example be one base station or a plurality of base stations.

The S-GW 300 transmits GTP-U packets and similar transmitted from the PDN-GW 400 to one of the base stations 200-1 to 200-3, based on a connection instruction from the MME 700. Further, the S-GW 300 transmits GTP-U packets and similar transmitted from the base stations 200-1 to 200-3 to the PDN-GW 400.

The PDN-GW 400 terminates an IP packet including user data transmitted from the streaming server 600 via the PDN 500, generates a GTP-U packet, and transmits the packet to the S-GW 300. The PDN-GW 400 also terminates a GTP-U packet transmitted from the S-GW 300, extracts the IP packet, and outputs the packet to the PDN 500. The PDN-GW 400 extracts time information and frame information from an IP packet transmitted from the streaming server 600, and includes this in a GTP-U packet which is transmitted. Details are explained below.

The PDN 500 is a network which transfers IP packets and other packet data, and may be for example the Internet.

The streaming server 600 stores user data and transmits user data items with the same content and a plurality of quality levels to the PDN 500. The streaming server 600 performs MPEG compression of user data, for example, and through the compression rate, can transmit high-quality, standard-quality, and low-quality user data items. Of course the number of quality levels may be other than three, and may be a plurality of types.

The MME 700 is connected to the base stations 200-1 to 200-3, S-GW 300, and HSS 800, and exchanges messages via respective interfaces. For example, the MME 700 authenticates users for the HSS 800, exchanges service information, and performs computation processing for authentication and similar. Further, the MME 700, upon for example receiving a connection request for the terminal 100 from a base station 200-1 to 200-3, outputs a connection instruction to the S-GW 300 indicating with which base station 200-1 to 200-3 to connect. And, the MME 700 issues EPS bearer IDs and E-RAB IDs, and outputs these to the S-GW 300 and base stations 200-1 to 200-3. In the E-RAB ID are set TEIDs (Tunnel Endpoint Identifiers) corresponding to user data items at each quality level. By means of this TEID, quality can be identified by each base station 200-1 to 200-3. Details of the EPS bearer ID and similar are explained below.

The HSS 800 holds subscriber information, service information and similar, and performs user authentication and similar by exchanging messages with the MME 700.

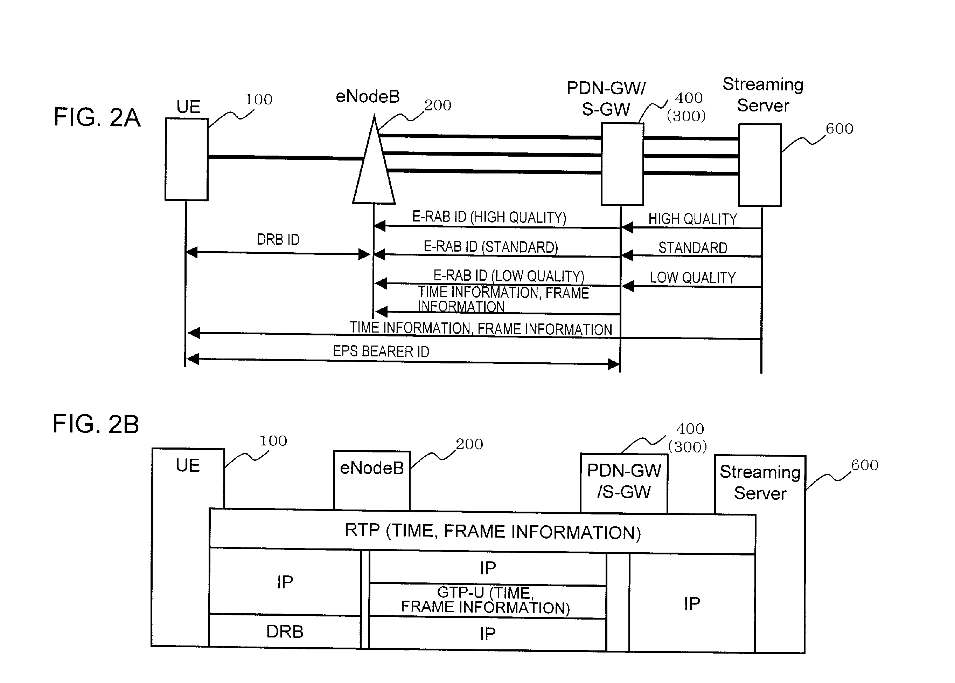

Next, the flow of user data in a radio communication system 10 configured in this way is explained. Fig. 2A illustrates an example in which user data items with a plurality of quality levels are transmitted; Fig. 2B illustrates an example of a protocol stack.

As illustrated in Fig. 2A, for the same user data, the streaming server 600 transmits, for example, high-quality, standard-quality, and low-quality user data items. The streaming server 600 transmits a time stamp (or time information) using a RTP (Real Time Protocol), as illustrated in Fig. 2B. Further, upon having performed compression processing using MPEG, the streaming server 600 transmits frame information indicating whether the frame type is an I-frame (intra-coded frame), B-frame (bi-directional predicted frame), or P-frame (predicted frame). The streaming server 600 includes for example the time stamp and frame information in the IP packet header and user data in the payload, and transmits the packet.

An I-frame is a frame in which, in the compression technology (for example, MPEG2 or similar) used in inter-frame prediction in which for example difference images between input images and predicted images are encoded, information within the frame for encoding (or for encoding by intra-frame encoding). And, for example P-frames are frames encoded using forward-direction prediction, and B-frames are frames encoded using either forward-direction prediction or backward-direction prediction, or both-direction prediction.

Upon receiving user data items with three quality levels or similar, the PDN-GW 400 further performs packet assembly (or encapsulation, or tunneling) of the IP packet, and generates a GTP-U packet. When generating the GTP-U packet, the PDN-GW 400 for example extracts the time stamp and frame information included in the IP packet header, and includes the time information and frame information in the GTP-U packet header before transmission.

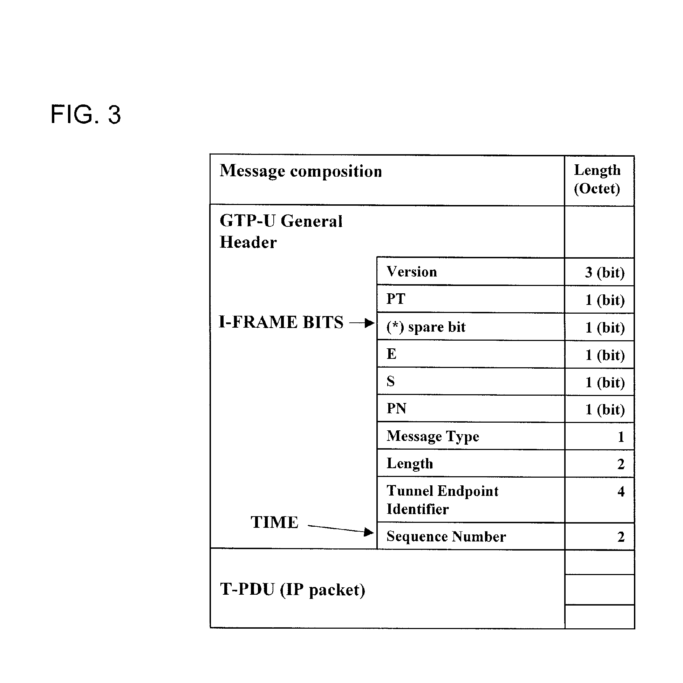

Fig. 3 illustrates an example of a GTP-U packet. As illustrated in Fig. 3, there is an area in the header of a GTP-U packet into which time information and frame information can be inserted; this PDN-GW 400 inserts time information and frame information into this area, and transmits the packet. Frame information is information indicating, for example, whether the frame included in the GTP-U packet is an I-frame. Instead of extracting a time stamp, the PDN-GW 400 may instead transmit the sequential number (SN) of the GTP-U header as time information.

Also, an area into which a TEID can be inserted is also present in the header of a GTP-U packet. The PDN-GW 400 receives the E-RAB ID from the MME 700 in advance, and uses the TEID included in the E-RAB ID to insert different TEIDs into the header for each quality level of user data and perform transmission. For example, the PDN-GW 400 includes "1" in the header as the TEID for high-quality user data and performs transmission. By this means, the base station 200 can identify the quality type from the TEID. The PDN-GW 400 and similar are assumed to share, as rules, information as to which TEID corresponds to which quality level. Further, it is assumed that the PDN-GW 400 identifies the quality from for example the compression rate or similar for user data at each quality level transmitted from the streaming server 600, and can select the TEID corresponding to the identified quality. Hence the streaming server 600 also transmits compression rate information, for example, to the PDN-GW 400.

The S-GW 300 transfers the GTP-U packet transmitted from the PDN-GW 400 to the base station 200. Conversion to a GTP-U packet may be performed by the S-GW 300. In this case, the PDN-GW 400 transfers the IP packet to the S-GW 300.

Upon receiving user data items with a plurality of quality levels, the base station 200 collects various statistical information related to the radio conditions of the radio link with the terminal 100 and the reception conditions of user data on the core network side of the S-GW 300 and similar. And, the base station 200 selects the user data with the optimum quality based on the statistical information. Details are explained below.

Next, the EPS bearer ID and similar are explained. As stated above, for example the MME 700 sets the EPS bearer ID, and transmits the EPS bearer ID to the S-GW 300 and, via the S-GW 300, to the PDN-GW 400 and the base station 200. The EPS bearer ID is an identifier which is for example allocated by (user) data. For example, an EPS bearer ID is set for a certain image data item, and a separate EPS bearer ID is set for another image data item.

Corresponding to this EPS bearer ID, an E-RAB ID is set between the PDN-GW 400 (or S-GW 300) and the base station 200, and a DRB ID (Data Radio Bearer ID) is set between the base station 200 and the terminal 100. The E-RAB ID and DRB ID are, similarly to the EPS bearer ID, IDs which for example identify user data, and are IDs which identify user data in each interval. For example, the EPS bearer ID and E-RAB ID are issued by the MME 700, and the DRB ID is issued by the base station 200.

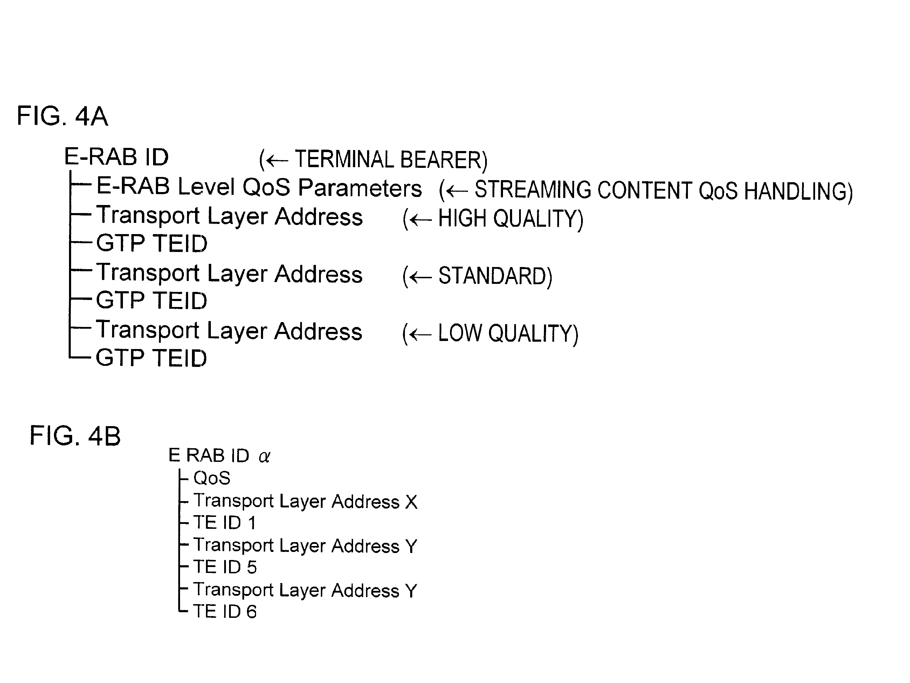

Fig. 4A and Fig. 4B illustrate examples of the configuration of an E-RAB ID. An E-RAB ID includes a parameter indicating the QoS (Quality of Service) of user data (or content which is streaming-reproduced at the terminal 100), and also includes different TEIDs corresponding to high quality, standard quality, and low quality. As illustrated in Fig. 4B, for example a TEID of "1" corresponds to high-quality, "5" corresponds to standard-quality, and "6" corresponds to low-quality user data. For example, the MME 700 generates such an E-RAB ID, and transmits the ID to the base station 200 and to the S-GW 300, and via the S-GW 300 to the PDN-GW 400.

A TEID is an identifier which identifies a terminal 100, indicating for example the address (or transmission destination) of a GTP-U packet. When two GTP-U packets have different TEIDs, the GTP-U packets are transmitted to different terminals 100. However, through binding with an E-RAB ID, as illustrated in Fig. 4A and similar, the base station 200 can transmit an IP packet to the same terminal 200 (the same E-RAB ID).

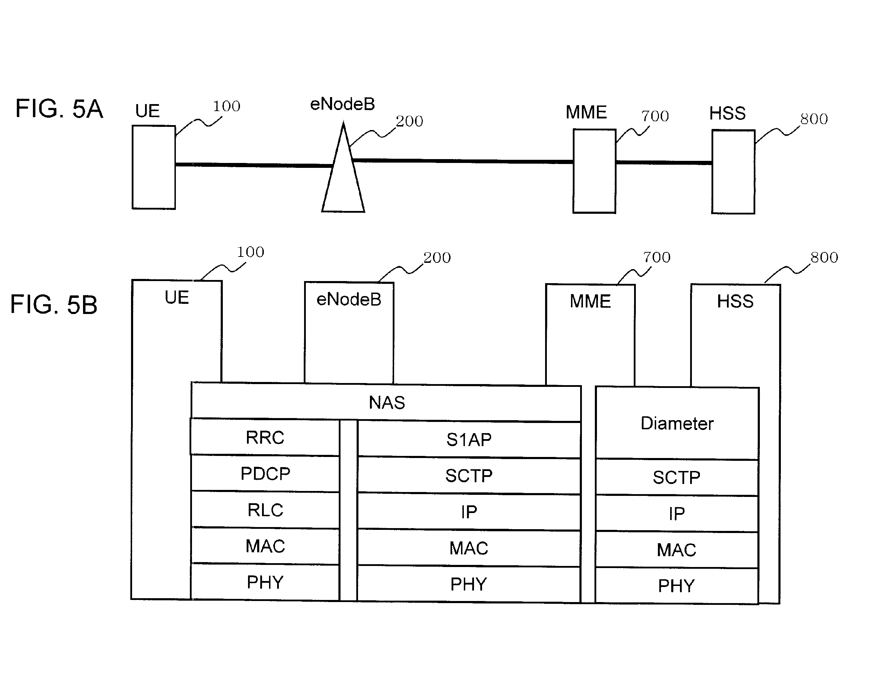

Fig. 5A and Fig. 5B respectively illustrate examples of the connection relations from the terminal 100 to the HSS 800, and a protocol stack. As illustrated in Fig. 5B, the MME 700 uses for example the S1 interface to transmit E-RAB IDs to the base station 200. The MME 700 similarly uses for example the S1 interface to transmit E-RAB IDs and EPS bearer IDs to the S-GW 300.

Returning to Fig. 2A, the base station 200 selects the user data item with optimum quality level, as explained above. At this time, there are also cases in which the base station 200 switches between user data items with different quality levels.

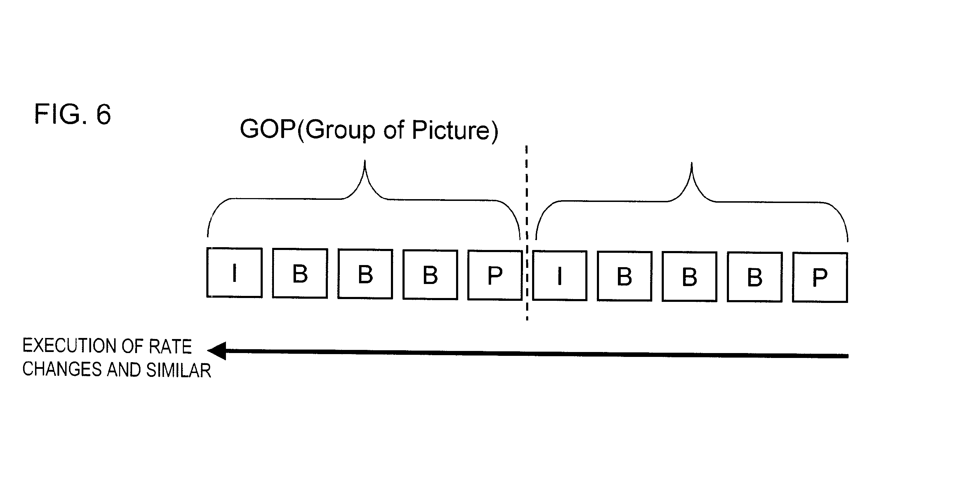

In this case, if the user data is compressed using MPEG, the base station 200 performs switching timed to occur between the P-frame (predicted frame) which is the final frame of the GOP (Group of Picture), and the I-frame (intra-coded frame) which is the initial frame in the next GOP. Fig. 6 illustrates an example of the switching timing. In the case of MPEG, compression and similar is performed in GOP (Group of Picture) units; this is because an I-frame can be expanded without using surrounding frames. Hence the base station 100 can for example use the frame information of the GTP-U header to detect whether the frame is an I-frame, and can perform switching with this timing. For example, a P-frame is a frame which in MPEG encoding processing is encoded using forward-direction prediction, and a B-frame (Bi-directional predicted frame) is a frame which is encoded selecting either forward-direction prediction, or backward-direction prediction, or both-direction prediction. Further, an I-frame is a frame which is for example encoded without using inter-frame prediction.

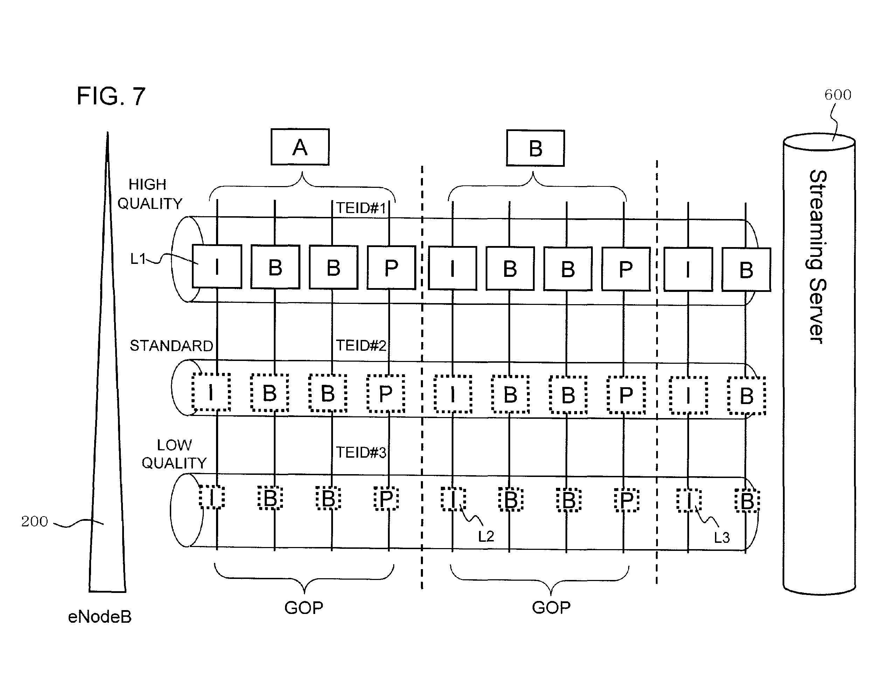

Further, when performing quality switching, it is desirable that the base station 200 perform switching such that a frame is temporally continuous. Fig. 7 illustrates an example of GOPs and switching timing. As illustrated in the figure, suppose for example that the time of an I-frame indicated by L1 is "9 hours, 0 minutes, 0 seconds"; that the time of an I-frame indicated by L2 is "9 hours, 0 minutes, 2 seconds"; and that the time of an I-frame indicated by L3 is "9 hours, 0 minutes, 4 seconds". Due to packet delays and similar during packet transfers from the streaming server 600 to the base station 200, there are also cases in which the GOP order is interchanged. For example, there are cases in which the base station 200 receives the I-frame L3 before receiving the I-frame L2. Hence the base station 200 takes into consideration interchanging of the frame order (or packet order) on the network side, and for example references time information inserted into GTP-U packets to perform switching. For example, the base station 200 detects whether frame time information is continuous before and after switching, and if continuous, performs transmission without modification, but if not continuous, performs interchanging and transmission so as to be continuous.

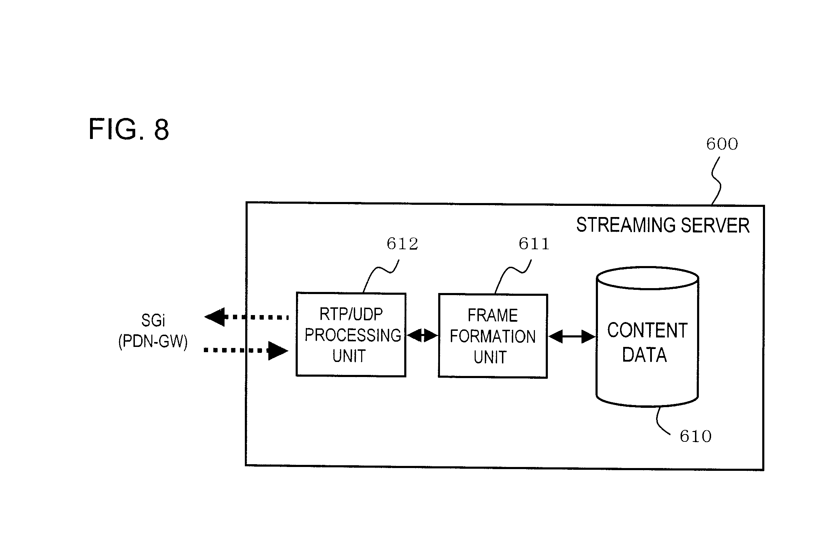

Next, examples of configurations, from the streaming server 600 to the terminal 100, are explained. Fig. 8 through Fig. 12 are figures illustrating each of the configurations.

Fig. 8 illustrates an example of the configuration of the streaming server 600. The streaming server 600 includes a content data storage unit 610, frame formation unit 611, and RTP/UDP processing unit 612.

The content storage unit 610 stores user data (or content data).

The frame formation unit 611 reads out user data from the content data storage unit 610, and creates frames. For example, the frame formation unit 611 performs MPEG compression of user data, and by compressing the same content user data in the order of smallest compression rate, generates high-quality, standard-quality, and low-quality user data. The frame formation unit 611 may output uncompressed user data as high-quality user data. The frame formation unit 611 outputs compressed and otherwise processed user data to the RTP/UDP processing unit 612. The frame formation unit 611 also outputs for example compression rate information, and outputs frame information indicating whether a frame to which user data belongs is for example an I-frame, a B-frame, or a P-frame. On the other hand, the frame formation unit 611 performs MPEG decoding and similar of compressed user data included in a frame output from the RTP-UDP processing unit 612, and stores the result in the content storage unit 610.

The RTP/UDP processing unit 612 generates an IP packet using for example the RTP protocol, or the UDP protocol, and transmits the packet to the PDN-GW 400. For example, the RTP/UDP processing unit 612 includes frame information, the compression rate, and the RTP protocol time stamp as time information in the header of the IP packet, and transmits the packet. The RTP/UDP processing unit 612 converts the IP packet into SGi transmission data conforming to the SGi interface, and transmits the data to the PDN-GW 400. On the other hand, the RTP/UDP processing unit 612 receives the SGi transmission data transmitted from the PDN-GW 400, converts the data into an IP packet, extracts user data and similar included in the IP packet, and outputs this to the frame formation unit 611.

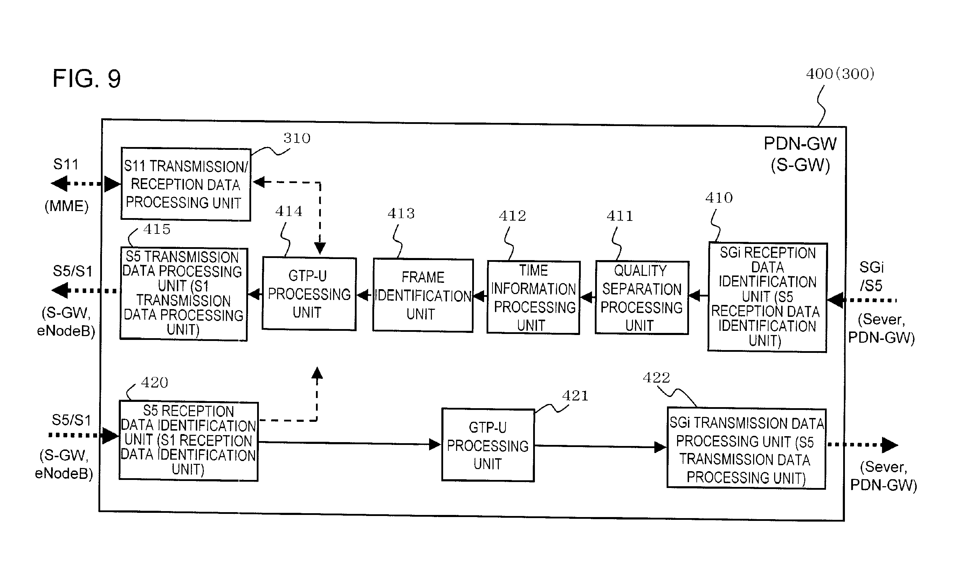

Fig. 9 illustrates an example of the configuration of the PDN-GW 400. In this example, the PDN-GW 400 and S-GW 300 may have the same configuration, or configuration example illustrated in Fig. 9 may be a configuration which includes both the PDN-GW 400 and the S-GW 300.

The PDN-GW 400 includes an SGi reception data identification unit 410; quality separation processing unit 411; time information processing unit 412; frame identification unit 413; GTP-U processing unit 414; S5 transmission data processing unit 415; S5 reception data identification unit 420; GTP-U processing unit 421; SGi transmission data processing unit 422; and S11 transmission and reception data processing unit 310.

The SGi reception data identification unit 410 identifies whether reception data is SGi reception data transmitted from the streaming server 600, and when the data is SGi reception data, converts the data into an IP packet and outputs the data to the quality separation processing unit 411. On the other hand, when the data is not SGi reception data, the SGi reception data identification unit 410 terminates the reception data, for example.

The quality separation processing unit 411 identifies the quality of user data included in the IP packet. For example, the quality separation processing unit 411 identifies quality from information on compression rate included in the header or similar of the IP packet, and separates quality. For example, the quality separation processing unit 411 identifies high quality, standard quality, and low quality, in the order of low compression rate. The quality separation processing unit 411 outputs identified qualities together with the received IP packet to the time information processing unit 412.

The time information processing unit 412 extracts time information included in the received IP packet. For example, the time information processing unit 412 extracts the time stamp included in the header of the IP packet, and outputs this, with the IP packet, to the frame identification unit 413.

The frame identification unit 413 identifies the frame to which user data included in the received IP packet belongs. For example, the frame identification program 413 outputs to the GTP-U processing unit 414, together with the IP address, frame identification information (information indicating whether the frame is an I-frame, P-frame, or B-frame) included in the header of the IP packet.

The GTP-U processing unit 414 inputs the quality separated by the quality separation processing unit 411, the time information extracted by the time information processing unit 412, the frame information identified by the frame identification unit 413, and the received IP packet. And, the GTP-U processing unit 414 further performs packet assembly (or encapsulation, or tunneling) of the received IP packet, and generates a GTP-U packet.

At this time, the GTP-U processing unit 414 uses the TEIDs contained in the E-RAB ID to establish a correspondence with each of the quality levels of user data included in the IP packet. The GTP-U processing unit 414 receives the E-RAB ID generated in advance by the MME 700 from the MME 700 via the S-GW 300. Hence the GTP-U processing unit 414 can use the TEIDs included in this E-RAB ID.

For example, when the quality from the quality separation processing unit 411 is high quality, the GTP-U processing unit 414 allocates "1" as the TEID (see for example Fig. 4B). And, when the quality is standard quality, the GTP-U processing unit 414 allocates "5" as the TEID, and allocates "6" as the TEID for low quality. The GTP-U processing unit 414 inserts the allocated TEID into the header of the GTP-U packet (see for example Fig. 3).

The GTP-U processing unit 414 inserts time information from the time information processing unit 412 and frame information from the frame identification unit 413 into the header of the GTP-U packet. For example, frame information inserted into the header is frame information which indicates whether the frame is an I-frame. Of course, the GTP-U processing unit 414 may insert frame information identifying I-, B-, or P-frames into the header.

That is, the GTP-U processing unit 414 generates a GTP-U header including for example frame information, time information, and also TEIDs corresponding to each of the quality levels, and outputs a GTP-U packet including this header to the S5 transmission data processing unit 415.

The S5 transmission data processing unit 415 converts the GTP-U packet into data conforming to the S5 interface, and transmits the result as S5 transmission data to the S-GW 300.

The S5 reception data identification unit 420 identifies whether the reception data is S5 transmission data transmitted from the S-GW 300. For example, when the reception data is S5 transmission data, the S5 reception data identification unit 420 converts the S5 transmission data into a GTP-U packet, and otherwise terminals the reception data.

The GTP-U processing unit 421 performs decapsulation (de-encapsulation), for example, of the GTP-U packet output from the S5 reception data identification unit 420, and extracts the IP packet. The GTP-U processing unit 421 outputs the extracted IP packet to the SGi transmission data processing unit 422.

The SGi transmission data processing unit 422 converts the IP packet into data conforming to the SGi interface, and transmits the data, as SGi transmission data, to the streaming server 600.

On the other hand, in the case of the S-GW 300 configuration example of Fig. 9, an S11 transmission and reception data processing unit 310, S5 reception data identification unit 410, S1 transmission data processing unit 415, S1 reception data identification unit 420, and S5 transmission data processing unit 422 are further included.

The S11 transmission and reception data processing unit 310 exchanges messages with the MME 700. For example, the S11 transmission and reception data processing unit 310 receives EPS bearer IDs and E-RAB IDs issued by the MME 700. The S11 transmission and reception data processing unit 310 converts extracted EPS bearer IDs and E-RAB IDs into data conforming to the S5 interface, and transmits the data as S5 transmission data to the PDN-GW 400. The S5 reception data identification unit 420 of the PDN-GW 400 receives this data, and outputs the data to the GTP-U processing unit 414. By this means, the GTP-U processing unit 414 of the PDN-GW 400 can receive E-RAB IDs and use TEIDs. Similarly when the S-GW 300 is provided with a GTP-U processing unit 414, TEIDs can be used by means of E-RAB IDs output from the S11 transmission and reception data processing unit 310.

The S5 reception data identification unit 410 identifies whether the transmission data is S5 transmission data transmitted from the PDN-GW 400, and if the data is S5 transmission data, outputs the data to the quality separation processing unit 411 (or to the S1 transmission data processing unit 415), but if the data is not S5 transmission data, the reception data is for example terminated.

The S1 transmission data processing unit 415 converts the GTP-U packet output from the GTP-U processing unit 414 (or from the S5 reception data identification unit 410) into data conforming to the S1 interface, and transmits the data, as S1 transmission data, to the base station 200.

The S1 reception data identification unit 420 identifies whether the reception data is S1 transmission data transmitted from the base station 200, and when the reception data is S1 transmission data, outputs the reception data to the GTP-U processing unit 421, but otherwise terminates the reception data, for example.

The S5 transmission data processing unit 422 converts the GTP-U packet output from the GTP-U processing unit 421 into S5 transmission data conforming to the S5 interface, and transmits the data to the PDN-GW 400.

The S-GW 300 need not include a GTP-U processing unit 414, frame identification unit 413, time information processing unit 412, quality separation processing unit 411, or GTP-U processing unit 421. In this case, the S-GW 300 causes a GTP-U packet output from the S5 reception data identification unit 410 to be input to the S1 transmission data processing unit 415, and the data is transmitted as S1 transmission data to the base station 200. Further, the S-GW 300 causes a GTP-U packet output from the S1 reception data identification unit 420 to be input to the S5 transmission data processing unit 422, and the data is transmitted as S5 transmission data to the PDN-GW 400.

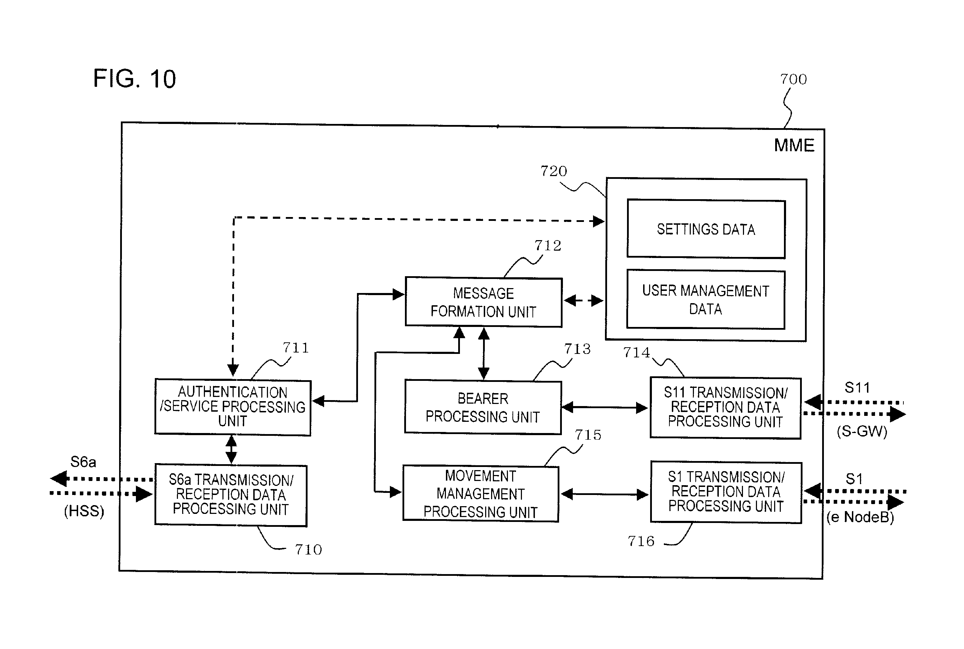

Fig. 10 illustrates an example of the configuration of the MME 700. The MME 700 includes an S6a transmission and reception data processing unit 710, authentication and service processing unit 711, message formation unit 712, bearer processing unit 713, S11 transmission and reception data processing unit 714, movement management processing unit 715, S1 transmission and reception data processing unit 716, and data storage unit 720.

The S6a transmission and reception data processing unit 710 exchanges messages with the HSS 800. The S6a transmission and reception data processing unit 710 receives S6a transmission data conforming to the S6a interface, and outputs data output from the authentication and service processing unit 711 and similar to the HSS 800 as S6a transmission data.

The authentication and service processing unit 711 performs computation processing and similar to perform authentication or execute service for authentication or other data transmitted from the HSS 800, based on authentication data, user management data or similar stored in the data storage unit 720.

The message formation unit 712 generates messages for exchange with the HSS 800, base station 200, or S-GW 300, based for example on user management data and similar stored in the data storage unit 720.

The bearer processing unit 713 generates EPS bearer IDs and E-RAB IDs, and for example outputs two IDs to the S11 transmission and reception data processing unit 714, and outputs an E-RAB ID to the movement management processing unit 715. The bearer processing unit 713 outputs an E-RAB ID including TEIDs corresponding to a plurality of quality levels, as for example illustrated in Fig. 4B.

The S11 transmission and reception data processing unit 714 exchanges messages with the S-GW 300. For example, the S11 transmission and reception data processing unit 714 converts EPS bearer IDs and E-RAB IDs into S11 transmission data conforming to the S11 format, and transmits the data. By this means, I-RAB IDs are transmitted to the S-GW 300 and PDN-GW 400.

The movement management processing unit 715 manages movement of the terminal 100, and for example manages which base station is the base station 200 of the movement origin of the terminal 100, and which base station is the base station 200 of the movement destination. Further, the movement management processing unit 715 outputs the E-RAB ID output from the bearer processing unit 713 to the S1 transmission and reception data processing unit 716.

The S1 transmission and reception data processing unit 716 exchanges messages with the base station 200. For example, the S1 transmission and reception data processing unit 716 converts an E-RAB ID output from the movement management processing unit 715 into S1 transmission data in the S1AP format, and transmits the data to the base station 200. By this means, the base station 200 can receive TEIDs included in E-RAB IDs, and can identify quality levels.

The data storage unit 720 stores various setting data to perform computations for authentication and similar, and management data relating to users.

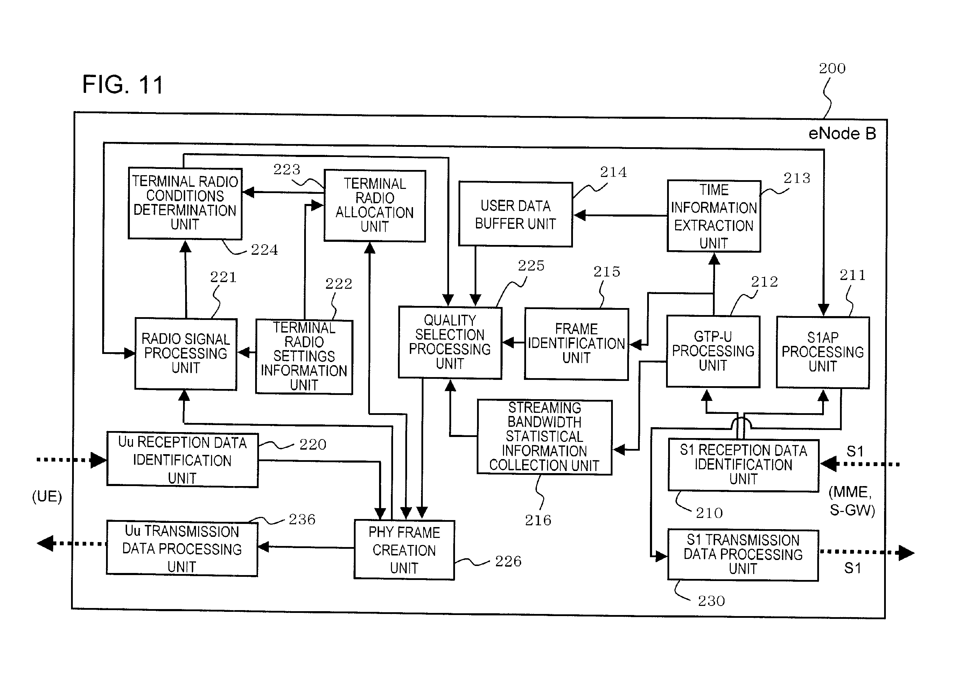

Fig. 11 illustrates an example of the configuration of a base station 200. The base station 200 includes an S1 reception data identification unit 210, S1AP processing unit 211, GTP-U processing unit 212, time information extraction unit 213, user data buffer unit 214, frame identification unit 215, streaming bandwidth statistical information collection unit 216, Uu reception data identification unit 220, radio signal processing unit 221, terminal radio settings information unit 222, terminal radio conditions determination unit 224, quality selection processing unit 225, PHY frame creation unit 226, and Uu transmission data processing unit 236.

The S1 reception data identification unit 210 identifies whether reception data is S1 reception data conforming to the S1 format. When for example reception data is S1 reception data, and is reception data output from the S-GW 300, the S1 reception data identification unit 210 converts the S1 reception data into a GTP-U packet, and outputs the packet to the GTP-U processing unit 212. Further, when reception data is S1 reception data, and moreover is S1 reception data transmitted from the MME 700, the S1 reception data identification unit 210 outputs the reception data to the S1AP processing unit 211. When reception data is not S1 reception data, the S1 reception data identification unit 210 terminates the reception data, for example.

The S1 AP processing unit 211 extracts various signals and similar from S1 reception data with the S1AP protocol, and outputs this to the radio signal processing unit 221. For example, the S1AP processing unit 211 extracts E-RAB IDs issued by the MME 700. The extracted E-RAB IDs are for example output to the quality selection processing unit 225 via the radio signal processing unit 221 and terminal radio conditions determination unit 224, and by this means the quality selection processing unit 225 enters a state in which the correspondence between TEIDs and quality levels can be identified. Further, the S1AP processing unit 211 converts radio signals output from the radio signal processing unit 221 into S1 transmission data with the S1AP protocol, and outputs the data to the S1 transmission data processing unit 230.

The GTP-U processing unit 212 performs decapsulation, for example, of the GTP-U packet and extracts the IP packet, and from the extracted IP packet extracts user data, which is output to the time information extraction unit 213 and the streaming bandwidth statistical information collection unit 216. The GTP-U processing unit 212 also for example outputs the GTP-U packet header to the time information extraction unit 213 and frame identification unit 215.

The time information extraction unit 213 extracts time information from the GTP-U header, and outputs the information, together with user data, to the user data buffer unit 214. For example, the time information extraction unit 213 extracts and outputs the SN number of the GTP-U header as time information, or extracts and outputs time information inserted into the header (see for example Fig. 3).

The user data buffer unit 214 temporarily stores user data and time information. User data is temporarily stored, for example, in order that a temporally continuous frame is transmitted when quality switching is performed between a P-frame and an I-frame in the quality switching processing unit 225. The user data buffer unit 214 stores user data corresponding to a plurality of quality levels of the same content, and also stores, for example for each quality level, a TEID together with the user data. By this means, for example the quality selection processing unit 225 can identify the quality of user data read out from the user data buffer unit 214.

The frame identification unit 215 extracts frame information from the GTP-U header, identifies whether user data included in the GTP-U packet belongs to an I-frame, and outputs this result to the quality selection processing unit 225. For example, the frame identification unit 215 extracts frame information from the GTP-U header illustrated in Fig. 3 indicating whether the frame is an I-frame.

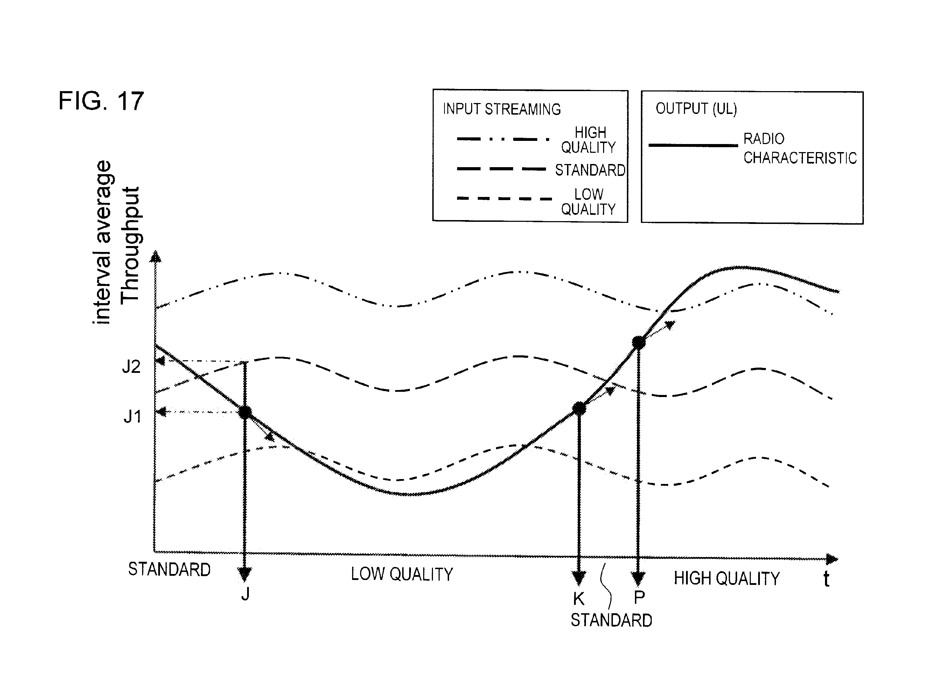

The streaming bandwidth statistical information collection unit 216 collects statistical information for user data at each quality level output from the GTP-U processing unit 212, and creates streaming bandwidth statistical information for each. For example, the streaming bandwidth statistical information collection unit 216 measures the bandwidth quantity (or data quantity, for example, bits per second) in a prescribed time or frame time, and by computing the interval average value or similar, creates streaming bandwidth statistical information. For example, the streaming bandwidth statistical information collection unit 216 creates streaming bandwidth statistical information for each quality level based on TEIDs output from the GTP-U processing unit 212. Details of this statistical information are explained below. Fig. 17 illustrates for example a graph of the trends in interval average values of user data bandwidth quantities. Details of Fig. 17 are explained below; for example, the interval average value for the high quality level is indicated by a dot-dot-dash line, the interval average value for the standard quality level is indicated by a dashed line, and the interval average value for the low quality level is indicated by the dotted line.

The Uu reception data identification unit 220 identifies whether received reception data is Uu reception data (or radio signals) transmitted from the terminal 100, and when the reception data is Uu reception data, outputs the Uu reception data to the PHY frame creation unit 226. For example, when the reception data is not Uu reception data, the Uu reception data identification unit 220 causes the reception data to be terminated.

Because in the PHY frame creation unit 225 radio signals of radio resources allocated to the terminal 200 by the terminal radio allocation unit 223 are extracted, the radio signal processing unit 221 inputs the extracted radio signals. The radio signal processing unit 221 performs decoding processing, demodulation processing and similar, for example, of the input radio signals. The radio signal processing unit 221 performs various processing based for example on capability information (for example, whether the terminal can perform MIMO transmission and reception, whether modulation methods include up to 64QAM, and similar) for each terminal 100, stored in the terminal radio settings information unit 222. Further, the radio signal processing unit 221 outputs the user data after demodulation to the S1AP processing unit 211, and outputs radio quality information after demodulation to the terminal radio conditions determination unit 224. The radio quality information is measured by the terminals 100, and may be, for example, the CQI (Channel Quality Indicator), PMI (Precoding Matrix Indicator), or RI (Rank Indicator).

The terminal radio allocation unit 223 performs scheduling for terminals 100, and performs allocation of radio resources when terminals 100 perform radio communication. For example, the terminal radio allocation unit 223 acquires radio quality information from the radio signal processing unit 221 via the terminal radio conditions determination unit 224, and performs scheduling based on this radio quality information.

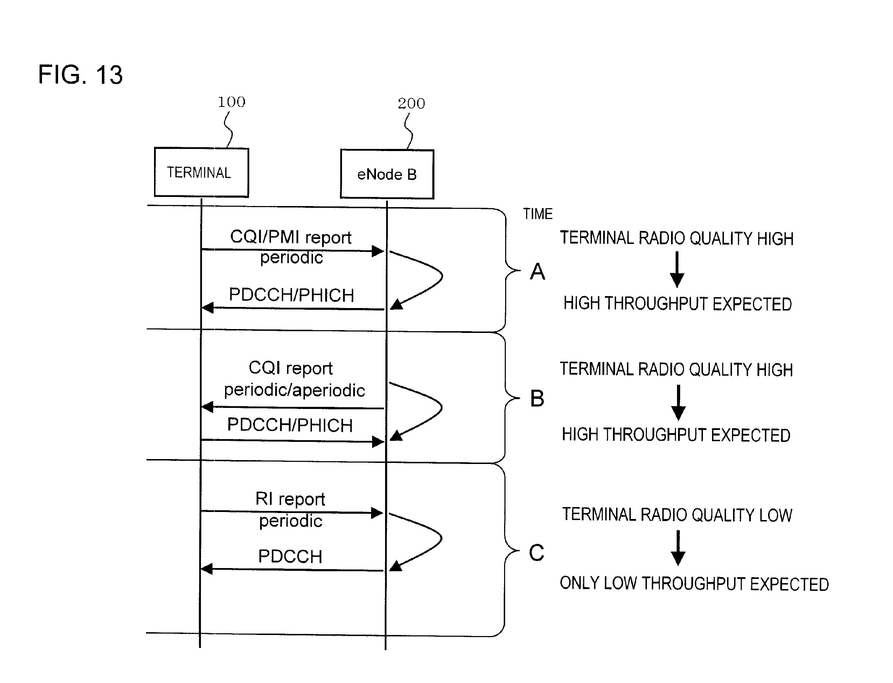

Fig. 13 through Fig. 15 illustrate an example of scheduling (or a terminal selection algorithm) in the terminal radio allocation unit 223. For example, as illustrated in Fig. 13, the terminal radio allocation unit 223 inputs the CQI, PMI, RI, or similar as radio quality information. And, when based on the CQI or similar it is indicated that the radio quality is higher than a threshold value, high throughput can be expected, and so the terminal radio allocation unit 223 sets the modulation method to QPSK, for example. Further, when it is indicated that the radio quality is lower than a threshold value, only low throughput can be expected, and so the terminal radio allocation unit 223 can set the modulation method to 16QAM or similar, for example.

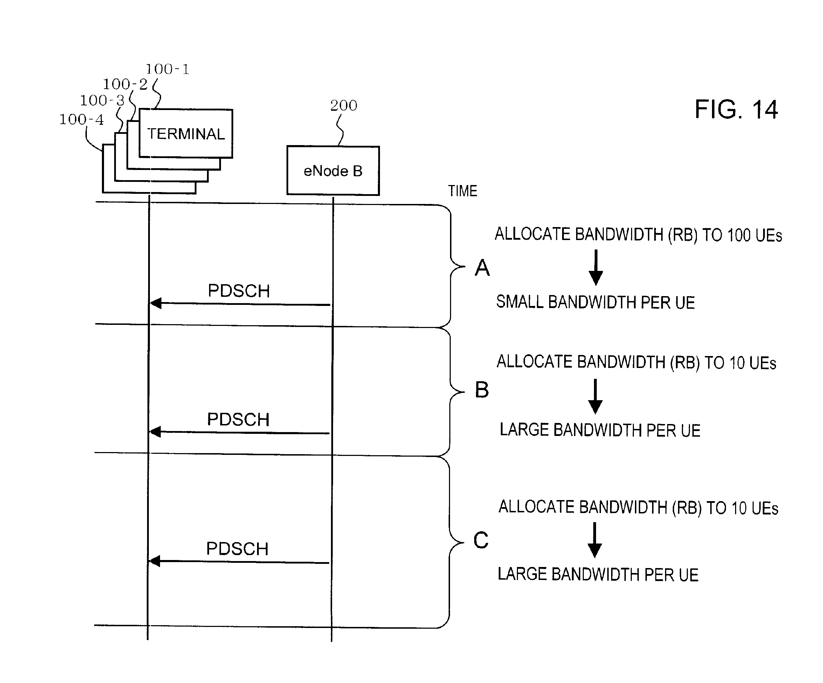

On the other hand, as illustrated in Fig. 14, the bandwidth quantity allocated to one terminal 100 by the terminal radio allocation unit 223 to the plurality of terminals 100-1, ..., subordinate to the base station 200 is different when the number of terminals is "100" and when the number is "10". For example, when the number of terminals is "100", the bandwidth quantity allocated to one terminal 100 is smaller than when the number of terminals is "10". On the other hand, when the number of terminals is "10", the bandwidth quantity allocated to one terminal 100 is large compared with when the number of terminals is "100".

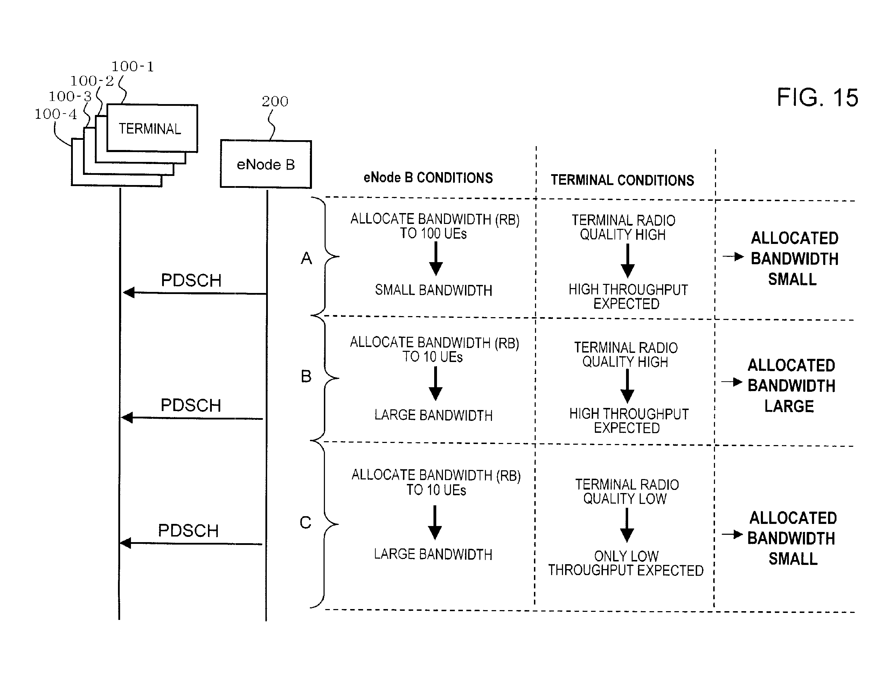

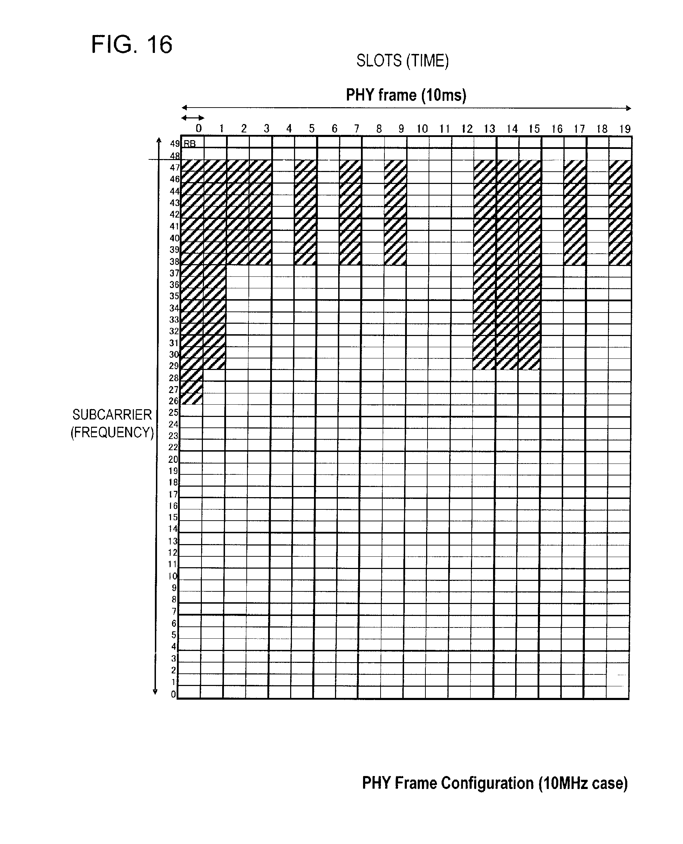

Fig. 15 illustrates an example of scheduling taking the above-described matters into consideration. For example, because the terminal radio allocation unit 223 performs allocation for terminals numbering "100" within a certain time "A", the bandwidth allocated to one terminal 100 is small compared with when the number of terminals is "10". However, because the radio quality for terminals 100 is higher than the threshold value, compared with when the radio quality is lower, higher throughput is possible. In such a case, the terminal radio allocation unit 223 makes the bandwidth allocated to one terminal 100, taking fairness and similar into account, smaller than the threshold value. Further, at time "B", the number of terminals is "10", and moreover high throughput can be expected, so that the terminal radio allocation unit 223 can make the bandwidth allocated to one terminal 100 greater than the threshold value. Fig. 16 illustrates an example of the configuration of a radio frame allocated by scheduling like that described above. Diagonal lines indicate an example of radio resources allocated to one terminal 100.

By means of such scheduling, the terminal radio allocation unit 223 can compute the bandwidth quantity allocated to one terminal 100, and can output the result to the terminal radio conditions determination unit 224. The terminal radio allocation unit 223 outputs allocated radio resources to the PHY frame creation unit 226.

By computing for example an interval average value (for example, the interval average value in unit time; for example, the interval average value for 100 slots may be used) based on the bandwidth quantity from the terminal radio allocation unit 223, the terminal radio conditions determination unit 224 can acquire the interval average value for the bandwidth quantity used in transmission for a certain terminal 100. By this means, by performing computations based on bandwidth quantities from the terminal radio allocation unit 223, the terminal radio conditions determination unit 224 can acquire statistical information for radio links. Details of this statistical information are described below. Fig. 17 illustrates an example of a graph of trends in interval average values of bandwidth quantities for terminals 100. For example, the graph illustrated by the solid line in Fig. 17 indicates bandwidth quantity interval average values.

The quality selection processing unit 225 judges whether the quality of current transmission is optimum, based on streaming bandwidth statistical information output from the streaming bandwidth statistical information collection unit 216 and on statistical information for radio links output from the terminal radio conditions determination unit 224. And, when the quality selection processing unit 225 judges quality to be optimum, user data continues to be transmitted at the quality of the current transmission, but if not optimum, user data with a different quality level is selected and transmission is performed.

Returning to Fig. 11, the quality selection processing unit 225 reads out user data at the quality selected or continued from the user data buffer unit 214, and outputs the data to the PHY frame creation unit 226.

The PHY frame creation unit 226 allocates radio resources for user data output from the quality selection processing unit 225 based on schedule information from the terminal radio allocation unit 223, and creates a PHY frame (see for example Fig. 16). Further, the PHY frame creation unit 226 extracts radio signals according to scheduling information from Uu reception data, and outputs the signals to the radio signal processing unit 221.

The Uu transmission data processing unit 236 performs modulation and similar of the PHY frame, and transmits the result as Uu transmission data (or radio signals) to the terminal 100.

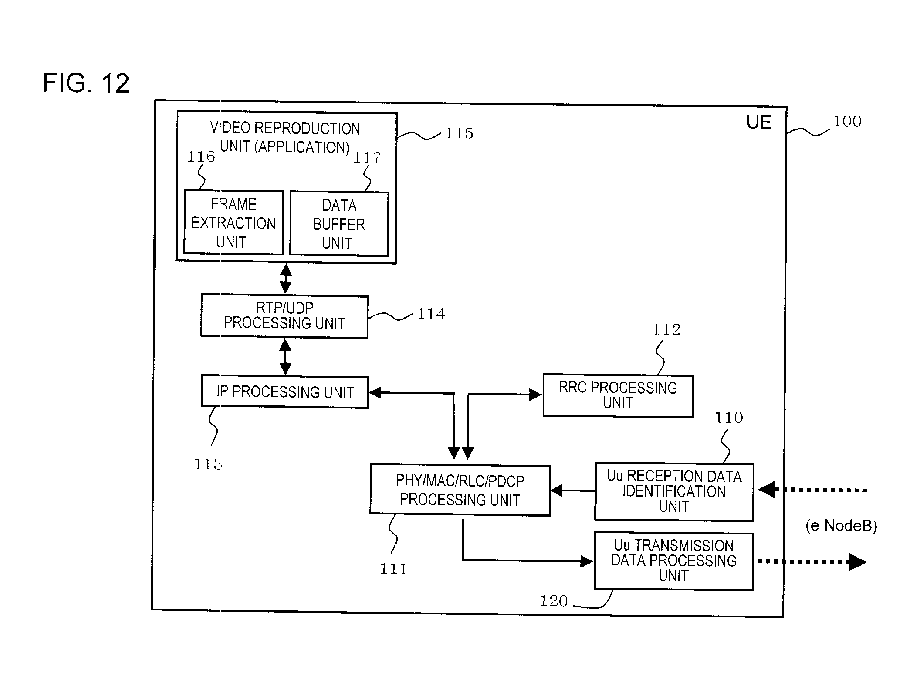

Fig. 12 illustrates an example of the configuration of a terminal 100. The terminal 100 includes a Uu reception data identification unit 110, PHY/MAC/RLC/PDCP processing unit (hereafter, PHY processing unit) 111, RRC processing unit 112, IP processing unit 113, RTP/UDP processing unit 114, and video reproduction unit 115. The video reproduction unit 115 includes a frame extraction unit 116 and data buffer unit 117.

The Uu reception data identification unit 110 identifies whether reception data is Uu reception data transmitted from the base station 200, and when the reception data is Uu reception data, outputs the reception data to the PHY processing unit 111, but otherwise terminates the reception data, for example.

The PHY processing unit 111 performs processing of the signal system, such as control signals of the PHY protocol. For example, the PHY processing unit 111 extracts control signals included in Uu reception data, pilot signals and similar, and based on control signals, performs decoding processing and similar using a prescribed encoding method and similar specified by the base station 200. Further, the PHY processing unit 111 converts CQI and other signals measured by the RRC processing unit 112 into signals with the PHY protocol or similar, and outputs the signals to the Uu transmission data processing unit 120.

The RRC processing unit 112 measures the radio quality in a radio link between the base station 200 and the terminal 100 based on known signals such as for example pilot signals or similar output from the PHY processing unit 111, and outputs the result to the PHY processing unit 111 as CQI, PMI, RI, or similar. By this means, the CQI or other radio quality is transmitted to the base station 200.

The IP processing unit 113, for example, extracts the transmission source address, transmission destination address and similar from the IP packet output from the PHY processing unit 111, and outputs this to the RTP/UDP processing unit 114. Further, the IP processing unit 113 inserts the transmission source address and similar into the header of the IP packet output from the RTP/UDP processing unit 114, and outputs the result to the PHY processing unit 111.

The RTP/UDP processing unit 114 extracts the RTP protocol time stamp, user data, and similar, for example, from the IP packet output from the IP processing unit 113, and outputs this to the video reproduction unit 115. Further, the RTP/UDP processing unit 114 inserts user data output from the video reproduction unit 115, time stamp, and similar into a prescribed area of the IP packet or similar, and outputs the result to the IP processing unit 113.

The video reproduction unit 115 performs for example MPEG decoding processing and similar of user data output from the RTP/UDP processing unit 114, and reproduces images at the quality level selected by the base station 200. For example, the frame extraction unit 116 forms an image frame from user data, and causes the image frame to be displayed on a display unit. Further, the data buffer unit 117 stores user data after MPEG decoding to cause successive display of image frames, for example.

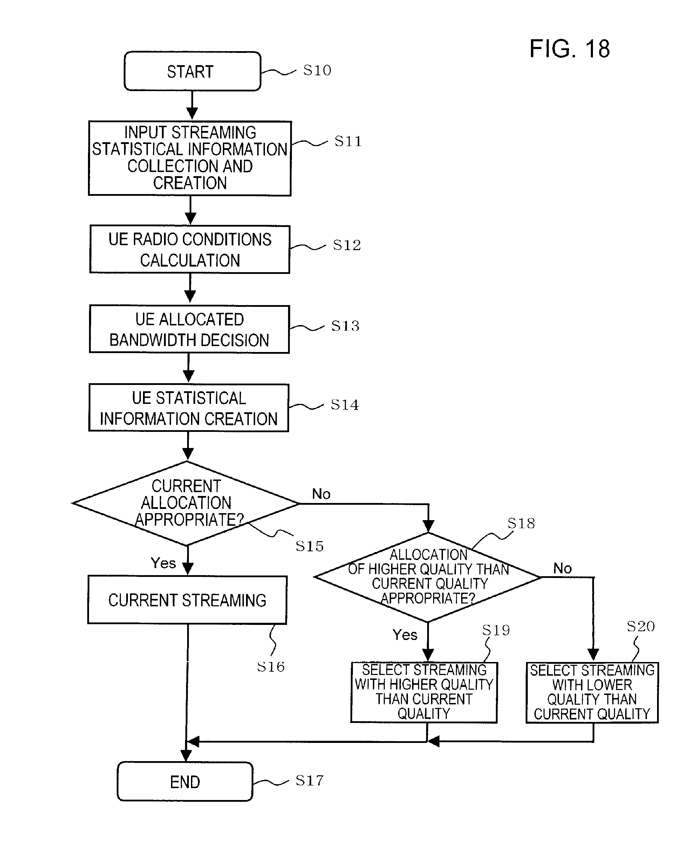

Next, an example of quality selection operation in the base station 200 is explained. Fig. 18 is a flowchart illustrating an example of operation. However, it is assumed that the MME 700 transmits to the base station 200 or similar an E-RAB ID (for example, see Fig. 4A and Fig. 4B), and that the base station 200 or similar determines which TEIDs are for high quality, for standard quality, and for low quality.

The base station 200 begins processing (S10), collects statistical information for input user data, and creates streaming bandwidth statistical information (S11). For example, the streaming bandwidth statistical information collection unit 216 creates streaming bandwidth statistical information items, based on data quantities (or bandwidth quantities) for prescribed time lengths of user data items at each quality level output from the GTP-U processing unit 212.

For example, within the time of a frame or a prescribed time i, if the user data quantity of quality n output from the GTP-U processing unit 212 is $Cn_i$, then the average input streaming (for example, the interval average value of the bandwidth quantity of user data described above) $Cn_{ave}$ is

$$Cn_{ave} = a\ cn_{i-1} + Cn_i \qquad\qquad \text{Equation (1)}$$

Here a is a constant. Relative to this average input streaming $Cn_{ave}$, the input user data rate of change $Cn_{der}$ is

$$Cn_{der} = Cn_{ave}\text{-}b\ Cn_i \qquad\qquad \text{Equation (2)}$$

Here b is a constant. The average input streaming $Cn_{ave}$ and user data rate of change $Cn_{der}$ can be used to obtain for the expected input streaming $Cn_{ex}$

$$Cn_{ex} = Cn_{ave} + c\ Cn_{der} \qquad\qquad \text{Equation (3)}$$

Here c is a constant. For example, the streaming bandwidth statistical information collection unit 216 calculates, for user data quantities (or bandwidth quantities) at each of the quality levels, the average input streaming $Cn_{ave}$, user data rate of change $Cn_{der}$, and expected input streaming $Cn_{ex}$ using Equation (1) to Equation (3), and outputs these as streaming bandwidth statistical information to the quality selection processing unit 225. For example, the streaming bandwidth statistical information collection unit 216 calculates streaming bandwidth statistical information for each quality level based on TEIDs, and outputs the statistical information, together with the TEIDs, to the quality selection processing unit 225.

Next, the base station 200 calculates the radio conditions of the terminal 100 (S12). For example, the terminal radio allocation unit 223 acquires the CQI or other radio quality information transmitted from the terminal 100.

Next, the base station 200 decides allocation of radio resources to the terminal 100 (S13). For example, the terminal radio allocation unit 223 decides radio bandwidth allocation to the terminal 100 based on the CQI or similar (for example, Fig. 15).

Next, the base station 200 creates statistical information for the terminal 100 (S14). For example, the terminal radio conditions determination unit 224 creates statistical information for the radio link (or terminal 100) based on the bandwidth quantity for the terminal 100 output from the terminal radio allocation unit 223. For example, within the time of a frame or a prescribed time i, if the bandwidth quantity allocated to a certain terminal 100 is $UE_i$, then the average radio characteristic (for example, the above-described radio bandwidth interval average value) $UE_{ave}$ is

$$UE_{ave} = a\ UE_{i-1} + UE_i \qquad\qquad \text{Equation (4)}$$

For this average radio characteristic $UE_{ave}$, the radio characteristic rate of change $UE_{der}$ is

$$UE_{der} = UE_{ave} - b\ UE_i \qquad\qquad \text{Equation (5)}$$

Using the average radio characteristic $UE_{ave}$ and the radio characteristic rate of change $UE_{der}$, the expected radio characteristic $UE_{ex}$ is

$$UE_{ex} = UE_{ave} + c\ UE_{der} \qquad\qquad \text{Equation (6)}$$

For example, the terminal radio conditions determination unit 224 uses Equation (4) to Equation (6) to calculate the average radio characteristic $UE_{ave}$, radio characteristic rate of change $UE_{der}$, and expected radio characteristic $UE_{ex}$ based on the bandwidth quantity $UE_i$ from the terminal radio allocation unit 223, and outputs these to the quality selection processing unit 225 as statistical information for the terminal 100.

Next, the base station 200 judges whether the current allocation of quality is appropriate (S15). For example, the quality selection processing unit 225 compares the expected input streaming $Cn_{ex}$ (for example, in the case of standard quality, $C2_{ex}$) corresponding to user data with the quality level currently being transmitted, and the expected radio characteristic $UE_{ex}$. And, if the difference is within "d", the quality selection processing unit 225 judges that the quality level of the user data currently being transmitted is appropriate (Yes in S15). In this case, the data quantity of user data as the expected value used in transmission of user data, and the radio characteristics (or bandwidth quantity) for the terminal 100, are on substantially the same level, so that the quality level currently being transmitted is judged to be appropriate. On the other hand, if the difference is greater than "d", the quality selection processing unit 225 judges that the quality level of the user data currently being transmitted is not appropriate (No in S15). For example, the quality selection processing unit 225 holds the TEID for the quality level of the user data being transmitted, compares a TEID output from the streaming bandwidth statistical information collection unit 216, and employs as objects of comparison the expected input streaming $Cn_{ex}$ at quality levels corresponding to the two TEIDs.

Fig. 17 is a graph illustrating an example of temporal trends in interval average values of user data bandwidth quantities and interval average values of bandwidth quantities for a terminal 100. In Fig. 17, for example the bandwidth quantity interval average value $UE_{ave}$ for the terminal 100 at point J can be represented by "J 1", and the expectation value for the value from this point in time to the next point in time is the expected radio characteristic $UE_{ex}$. Further, the bandwidth quality interval average value $Cn_{ave}$ for user data of standard quality at point J is "J2". The expectation value from this "J2" to the next point in time is the expected input streaming $Cn_{ex}$. For example, as a difference, the difference between the two interval average values $Cn_{ex}$, $Cn_{ex}$ expected on the graph is illustrated, and a judgment as to whether quality is appropriate is made according to whether this difference is within the threshold value "d". For example, when the difference between the two expectation values $Cn_{ex}$, $Cn_{ex}$ is within the threshold value, the quality selection processing unit 225 judges that the current quality is appropriate, and when greater than the threshold value, judges that the current quality is not appropriate.

Upon judging that the current quality allocation is appropriate (Yes in S15), the base station 200 continues transmission of user data at the current quality (S16). And, the base station 200 ends the series of processing (S17).

On the other hand, upon judging that the current quality allocation is not appropriate (No in S15), the base station 200 judges whether allocation of a higher quality level than the current quality is appropriate (S18). For example, the quality selection processing unit 225 compares the expected input streaming $Cn_{ex}$ and the expected radio characteristic $UE_{ex}$, and when the expected input streaming $Cn_{ex}$ is greater than the expected radio characteristic $UE_{ex}$, it is anticipated that the radio characteristic will decline, and so judges that allocation of a higher quality level than the current quality is not appropriate. On the other hand, when the expected radio characteristic $UE_{ex}$ is the same as or greater than the expected input streaming $Cn_{ex}$, the quality selection processing unit 225 anticipates that the radio characteristic will rise, and so judges that allocation of a higher quality level than the current quality is appropriate. For example, in the example of Fig. 17, at point J the expected input streaming $C2_{ex}$ is greater than the expected radio characteristic $UE_{ex}$, and so the quality selection processing unit 225 judges that allocation of a higher quality level than the current quality is not appropriate (No in S18). On the other hand, at point K the expected radio characteristic $UE_{ex}$ is greater than the expected input streaming $C1_{ex}$, and so the quality selection processing unit 225 judges that allocation of a higher quality level than the current quality is appropriate (Yes in S18).

Upon judging that allocation of a higher quality level than the current quality is appropriate (Yes in S18), the base station 200 selects user data at the quality level judged to be appropriate (S19). On the other hand, upon judging that allocation of a higher quality level than the current quality is not appropriate (No in S18), the base station 200 selects user data at a quality level lower than the current quality (S20). In the example of Fig. 17, the quality selection processing unit 225 selects the low-quality user data at point J, and selects the standard-quality user data at point K. For example, the quality selection processing unit 225 performs this processing by reading the user data corresponding to the TEID of the selected quality level from the user data buffer 214.

The base station 200 transmits user data with the selected quality to the terminal 100, and ends the series of processing (S17). At this time, as explained above, the base station 200 performs switching between a P-frame and an I-frame when selecting user data and performing switching, and performs switching so as to be temporally continuous.

In this way, this base station 200 selects and transmits user data at the optimum quality level from user data at a plurality of quality levels, based on statistical information for the terminal 100 (or radio interval) and on statistical information for the input user data items at each of the quality levels. Hence in the radio interval between the base station 200 and the terminal 100, user data at one quality level is transmitted, so that no waste of radio bandwidth occurs compared with a case in which user data items at a plurality of quality levels are all transmitted, and the radio bandwidth can be utilized effectively. Further, the base station 200 selects the quality level based on two characteristics, which are the radio characteristic in the radio interval and the data quantity transferred over the wire interval, so that user data at the optimum quality level can be selected and transmitted according to both the radio characteristic and the data quantity.

And, the base station 200 performs selection based on two expectation values $Cn_{ex}$, $Cn_{ex}$, so that compared with a case in which a quality request is received from the terminal 100 and the quality level is selected, an appropriate quality level conforming to the current radio conditions and the input data quantity can be selected.

In the above-described example, an explanation was given assuming that the streaming server 600 and the PDN-GW 400 are separate apparatuses. However, the streaming server 600 and PDN-GW 400 may for example be a single apparatus. For example, the PDN-GW 400 may include the content data storage unit 610, frame formation unit 611, and similar of the streaming server 600. Or, the streaming server 600 may include each of the constituent units of the PDN-GW 400.

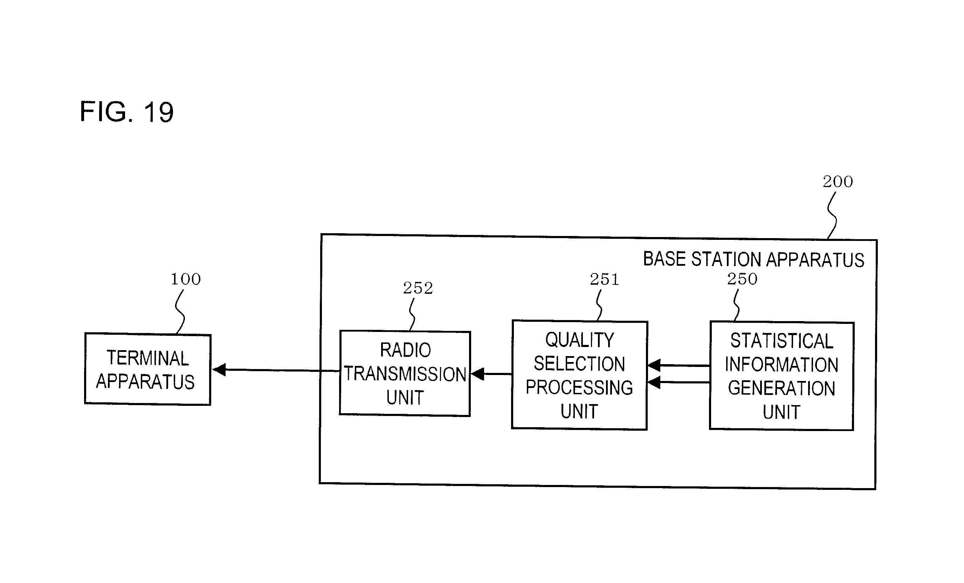

Fig. 19 illustrates an example of another configuration of a base station 200. The base station 200 include a statistical information generation unit 250, a quality selection processing unit 251, and a radio transmission unit 252.

The statistical information generation unit 250 generates first statistical information relating to the terminal 100 and second statistical information relating to user data at a first or second quality level. The statistical information generation unit 250 corresponds for example to the terminal radio conditions determination unit 224 and the streaming bandwidth statistical information collection unit 216 in Fig. 11.

The quality selection processing unit 251 selects user data at the first or second quality level based on the first and second statistical information. The quality selection processing unit 251 corresponds for example to the quality selection processing unit 225 in Fig. 11.

The radio transmission unit 252 performs radio transmission to the terminal of user data at the selected first or second quality level. The radio transmission unit 252 corresponds for example to the PHY frame creation unit 226 and Uu transmission data processing unit 236 in Fig. 11.

For example, in order to transmit user data at the first or second quality level, the base station 200 can compare cases of transmission of user data at both the first and the second quality levels, to reduce the data transmission quantity and effectively utilize radio bandwidth. Further, based on the first statistical information and second statistical information, the base station 200 selects and transmits data at the first or the second quality level, so that compared with a case in which the terminal 100 transmits a switching request, user data responsive to the conditions of radio changes can be transmitted. Hence the base station 200 can select data at the optimum quality level and can transmit the data to the terminal 100.

A base station apparatus, radio transmission method in a base station apparatus, and radio communication system to enable effective utilization of radio bandwidth can be provided. Further, a base station apparatus, radio transmission method in a base station apparatus, and radio communication system to enable selection and transmission of data at the optimum quality can be provided.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present inventions have) been described in detail, it should be understood that the various changes, substitutions, and alterations could be made hereto without departing from the scope of the invention.

## Claims

1. A base station apparatus for performing radio communication with a terminal apparatus, the base station apparatus comprising:

   a statistical information generation unit which is arranged to generate first statistical information relating to the terminal apparatus and second statistical information relating to user data at a first or second quality level;
   a quality selection processing unit which is arranged to select the user data at the first or second quality level based on the first and second statistical information; and
   a radio transmission unit which is arranged to perform radio transmission to the terminal apparatus of the selected user data at the first or second quality level.

2.  The base station apparatus according to Claim 1, wherein the statistical information generation unit employs, as the first statistical information, a first expectation value relating to a bandwidth quantity of radio resources allocated to the terminal apparatus, and employs, as the second statistical information, a second expectation value relating to a data quantity of the user data at the first or second quality level.

3.  The base station apparatus according to Claim 2, wherein the quality selection processing unit is arranged to select the user data at the second quality level when a difference between the first statistical information and the second statistical information relating to the user data at the first quality level is equal to or greater than a threshold value, and to select the user data at the first quality level when the difference is less than the threshold value.

4.  The base station apparatus according to Claim 3, wherein the quality selection processing unit is arranged to select the user data at the second quality level which is a level higher than the first quality level when the first statistical information is greater than the second statistical information relating to the user data at the first quality level, and to select the user data at the second quality level which is a level the same as the first quality level or lower than the first quality level when the first statistical information is the same as or less than the second statistical information relating to the user data at the first quality level.

5.  The base station apparatus according to any preceding Claim, wherein, when selecting the user data at the second quality level and switching from the user data at the first quality level to the user data at the second quality level, the quality selection processing unit is arranged to perform switching such that a frame to which the user data at the second quality level belongs is a frame encoded by frame intra-coding after switching.

6.  The base station apparatus according to any of Claims 1 to 4, wherein, when selecting the user data at the second quality level and switching from the user data at the first quality level to the user data at the second quality level, the quality selection processing unit is arranged to perform switching such that a frame to which the user data at the first quality level belongs before switching and a frame to which the user data at the second quality level belongs after switching are continuous in time.

7.  The base station apparatus according to any preceding Claim, wherein
a first packet which further encapsulates a packet including the user data at the first and second quality levels, is output from an upper node apparatus connected to the base station apparatus, and
the quality selection processing unit is arranged to identify the user data at the first and second quality levels using a first identifier included in the first packet, indicating a transmission destination of the first packet and is for identifying the terminal apparatus, and to select the user data at the first or second quality level.

8.  The base station apparatus according to Claim 7, wherein the quality selection processing unit is arranged to identify the user data at the first and second quality levels based on the first identifier, set corresponding to a second identifier for identifying user data for radio transmission to the terminal apparatus between the upper node apparatus and the base station apparatus.

9.  The base station apparatus according to Claim 2, 3, or 4, further comprising
a terminal radio allocation unit which is arranged to allocate the radio resources to the terminal apparatus, and decides the bandwidth quantity allocated to the terminal apparatus, wherein
the statistical information generation unit is arranged to compute the first statistical information based on the decided bandwidth quantity.

10. The base station apparatus according to Claim 2, 3, 4, or 9, wherein the statistical information generation unit is arranged to calculate an interval average value of the bandwidth quantity and to calculate a rate of change of the interval average value, predict the interval average value of the bandwidth quantity based on the rate of change, and employ the predicted interval average value as the first expectation value.

11. The base station apparatus according to Claim 2, 3, 4, or 9wherein the statistical information generation unit is arranged to calculate an interval average value of the user data quantity and to compute a rate of change of the interval average value, predict the interval average value of the user data quantity based on the rate of change, and employ the predicted interval average value as the second expectation value.

**12.** The base station apparatus according to Claim 5, wherein the quality selection processing unit is arranged to identify the frame encoded by frame intra-coding based on frame identification information transmitted from an upper node apparatus connected to the base station apparatus.

**13.** The base station apparatus according to Claim 6, wherein the quality selection processing unit is arranged to perform switching such that continuity in time is established, based on time information transmitted from an upper node apparatus connected to the base station apparatus.

**14.** The base station apparatus according to Claim 8, wherein the first identifier is an identifier which identifies the terminal apparatus which is a transmission destination of the first packet, and the second identifier is an identifier which identifies the user data between the upper node apparatus and the base station apparatus.

**15.** A radio transmission method in a base station apparatus which performs radio communication with a terminal apparatus, the radio transmission method comprising:

generating first statistical information relating to the terminal apparatus and second statistical information relating to user data at a first or second quality level;
selecting the user data at the first or second quality level based on the first and second statistical information; and
performing radio transmission to the terminal apparatus of the selected user data at the first or second quality level.

**16.** A radio communication system, comprising:

a terminal apparatus;
an upper node apparatus; and
a base station apparatus connected to the upper node apparatus, for performing radio communication with the terminal apparatus, wherein

the upper node apparatus includes a transmission unit which is arranged to transmit user data at a first and second quality levels to the base station apparatus, and
the base station apparatus includes a statistical information generation unit which is arranged to generate first statistical information relating to the terminal apparatus and second statistical information relating to the user data at the first or second quality level, a quality selection processing unit which is arranged to select the user data at the first or second quality level based on the first and second statistical information, and a radio transmission unit which is arranged to perform radio transmission to the terminal apparatus of the selected user data at the first or second quality level.

FIG. 1

Streaming Server 600

PDN (Internet) 500

PDN-GW 400

S-GW 300

MME 700

HSS 800

eNodeB 200-1

eNodeB 200-2

eNodeB 200-3

UE 100

RADIO COMMUNICATION SYSTEM 10

EP 2 372 963 A1

FIG. 2A

UE 100　　　eNodeB 200　　　PDN-GW/ S-GW 400 (300)　　　Streaming Server 600

E-RAB ID (HIGH QUALITY) ← HIGH QUALITY

DRB ID

E-RAB ID (STANDARD) ← STANDARD

E-RAB ID (LOW QUALITY) ← LOW QUALITY

TIME INFORMATION, FRAME INFORMATION

TIME INFORMATION, FRAME INFORMATION

EPS BEARER ID

FIG. 2B

UE 100　　　eNodeB 200　　　PDN-GW /S-GW 400 (300)　　　Streaming Server 600

RTP (TIME, FRAME INFORMATION)

| IP | IP | IP |
| DRB | GTP-U (TIME, FRAME INFORMATION) | |
| | IP | |

# FIG. 3

| Message composition | | Length (Octet) |
|---|---|---|
| **GTP-U General Header** | | |
| I-FRAME BITS → | Version | 3 (bit) |
| | PT | 1 (bit) |
| | (*) spare bit | 1 (bit) |
| | E | 1 (bit) |
| | S | 1 (bit) |
| | PN | 1 (bit) |
| | Message Type | 1 |
| | Length | 2 |
| | Tunnel Endpoint Identifier | 4 |
| TIME → | Sequence Number | 2 |
| **T-PDU (IP packet)** | | |

EP 2 372 963 A1

## FIG. 4A

E-RAB ID  (← TERMINAL BEARER)
├─ E-RAB Level QoS Parameters  (← STREAMING CONTENT QoS HANDLING)
├─ Transport Layer Address  (← HIGH QUALITY)
├─ GTP TEID
├─ Transport Layer Address  (← STANDARD)
├─ GTP TEID
├─ Transport Layer Address  (← LOW QUALITY)
└─ GTP TEID

## FIG. 4B

E RAB ID $\alpha$
├ QoS
├ Transport Layer Address X
├ TE ID 1
├ Transport Layer Address Y
├ TE ID 5
├ Transport Layer Address Y
└ TE ID 6

EP 2 372 963 A1

FIG. 5A

UE 100    eNodeB 200    MME 700    HSS 800

FIG. 5B

UE 100    eNodeB 200    MME 700    HSS 800

| NAS | | |
|---|---|---|
| RRC | S1AP | Diameter |
| PDCP | SCTP | SCTP |
| RLC | IP | IP |
| MAC | MAC | MAC |
| PHY | PHY | PHY |

EP 2 372 963 A1

## FIG. 6

GOP(Group of Picture)

EXECUTION OF RATE
CHANGES AND SIMILAR

EP 2 372 963 A1

# FIG. 7

FIG. 8

STREAMING SERVER 600

SGi (PDN-GW)

RTP/UDP PROCESSING UNIT 612

FRAME FORMATION UNIT 611

CONTENT DATA 610

FIG. 9

400(300)

**PDN-GW (S-GW)**

S11 (MME) — 310 S11 TRANSMISSION/RECEPTION DATA PROCESSING UNIT

S5/S1 (S-GW, eNodeB) — 415 S5 TRANSMISSION DATA PROCESSING UNIT (S1 TRANSMISSION DATA PROCESSING UNIT)

414 GTP-U PROCESSING UNIT

413 FRAME IDENTIFICATION UNIT

412 TIME INFORMATION PROCESSING UNIT

411 QUALITY SEPARATION PROCESSING UNIT

410 SGi RECEPTION DATA IDENTIFICATION UNIT (S5 RECEPTION DATA IDENTIFICATION UNIT)

SGi /S5 (Sever, PDN-GW)

S5/S1 (S-GW, eNodeB) — 420 S5 RECEPTION DATA IDENTIFICATION UNIT (S1 RECEPTION DATA IDENTIFICATION UNIT)

421 GTP-U PROCESSING UNIT

422 SGi TRANSMISSION DATA PROCESSING UNIT (S5 TRANSMISSION DATA PROCESSING UNIT)

(Sever, PDN-GW)

FIG. 10

700

MME

720

SETTINGS DATA

USER MANAGEMENT DATA

712

MESSAGE FORMATION UNIT

711

AUTHENTICATION /SERVICE PROCESSING UNIT

713

BEARER PROCESSING UNIT

714

S11 TRANSMISSION/ RECEPTION DATA PROCESSING UNIT

S11

(S-GW)

715

MOVEMENT MANAGEMENT PROCESSING UNIT

S6a

S6a TRANSMISSION/ RECEPTION DATA PROCESSING UNIT

(HSS)

710

716

S1 TRANSMISSION/ RECEPTION DATA PROCESSING UNIT

S1

(e NodeB)

EP 2 372 963 A1

FIG. 11

## FIG. 12

FIG. 12

VIDEO REPRODUCTION UNIT (APPLICATION) — 115

FRAME EXTRACTION UNIT — 116

DATA BUFFER UNIT — 117

RTP/UDP PROCESSING UNIT — 114

IP PROCESSING UNIT — 113

RRC PROCESSING UNIT — 112

PHY/MAC/RLC/PDCP PROCESSING UNIT — 111

Uu RECEPTION DATA IDENTIFICATION UNIT — 110

Uu TRANSMISSION DATA PROCESSING UNIT — 120

UE — 100

(e NodeB)

EP 2 372 963 A1

# FIG. 13

TERMINAL 100    eNode B 200

TIME

**A**
CQI/PMI report periodic →
← PDCCH/PHICH
TERMINAL RADIO QUALITY HIGH
↓
HIGH THROUGHPUT EXPECTED

**B**
← CQI report periodic/aperiodic
PDCCH/PHICH →
TERMINAL RADIO QUALITY HIGH
↓
HIGH THROUGHPUT EXPECTED

**C**
RI report periodic →
← PDCCH
TERMINAL RADIO QUALITY LOW
↓
ONLY LOW THROUGHPUT EXPECTED

FIG. 14

100-1
100-2
100-3
100-4

TERMINAL

200

eNode B

TIME

ALLOCATE BANDWIDTH (RB) TO 100 UEs

A

PDSCH

SMALL BANDWIDTH PER UE

ALLOCATE BANDWIDTH (RB) TO 10 UEs

B

PDSCH

LARGE BANDWIDTH PER UE

ALLOCATE BANDWIDTH (RB) TO 10 UEs

C

PDSCH

LARGE BANDWIDTH PER UE

EP 2 372 963 A1

# FIG. 15

| | eNode B CONDITIONS | TERMINAL CONDITIONS | |
|---|---|---|---|
| A | ALLOCATE BANDWIDTH (RB) TO 100 UEs ↓ SMALL BANDWIDTH | TERMINAL RADIO QUALITY HIGH ↓ HIGH THROUGHPUT EXPECTED | ALLOCATED → BANDWIDTH SMALL |
| B | ALLOCATE BANDWIDTH (RB) TO 10 UEs ↓ LARGE BANDWIDTH | TERMINAL RADIO QUALITY HIGH ↓ HIGH THROUGHPUT EXPECTED | ALLOCATED → BANDWIDTH LARGE |
| C | ALLOCATE BANDWIDTH (RB) TO 10 UEs ↓ LARGE BANDWIDTH | TERMINAL RADIO QUALITY LOW ↓ ONLY LOW THROUGHPUT EXPECTED | ALLOCATED → BANDWIDTH SMALL |

EP 2 372 963 A1

## FIG. 16

SLOTS (TIME)

PHY frame (10ms)

SUBCARRIER (FREQUENCY)

PHY Frame Configuration (10MHz case)

FIG. 17

FIG. 18

START — S10

INPUT STREAMING
STATISTICAL INFORMATION
COLLECTION AND
CREATION — S11

UE RADIO CONDITIONS
CALCULATION — S12

UE ALLOCATED
BANDWIDTH DECISION — S13

UE STATISTICAL
INFORMATION CREATION — S14

CURRENT
ALLOCATION
APPROPRIATE? — S15

No → ALLOCATION
OF HIGHER QUALITY THAN
CURRENT QUALITY
APPROPRIATE? — S18

Yes

CURRENT STREAMING — S16

Yes → SELECT STREAMING
WITH HIGHER QUALITY
THAN CURRENT
QUALITY — S19

No → SELECT STREAMING
WITH LOWER
QUALITY THAN
CURRENT QUALITY — S20

END — S17

## FIG. 19

TERMINAL APPARATUS 100

BASE STATION APPARATUS 200

RADIO TRANSMISSION UNIT 252

QUALITY SELECTION PROCESSING UNIT 251

STATISTICAL INFORMATION GENERATION UNIT 250

EP 2 372 963 A1

Europäisches
Patentamt

European
Patent Office

Office européen
des brevets

# EUROPEAN SEARCH REPORT

Application Number

EP 11 15 6078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE S ET AL: "Combining the rate adaptation and quality adaptation schemes for wireless video streaming", JOURNAL OF VISUAL COMMUNICATION AND IMAGE REPRESENTATION, ACADEMIC PRESS, INC, US, vol. 19, no. 8, 1 December 2008 (2008-12-01), pages 508-519, XP025691586, ISSN: 1047-3203, DOI: DOI:10.1016/J.JVCIR.2008.08.004 [retrieved on 2008-08-30] * the whole document * | 1-15 | INV. H04L12/56 H04W72/12 |
| | | | TECHNICAL FIELDS SEARCHED (IPC) |
| | | | H04L H04W |

The present search report has been drawn up for all claims

| Place of search | Date of completion of the search | Examiner |
|---|---|---|
| The Hague | 23 May 2011 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008154145 A
- JP 2005121693 A